(19) Europäisches Patentamt
European Patent Office
Office européen des brevets

(11) EP 4 726 329 A1

(12) EUROPEAN PATENT APPLICATION

(43) Date of publication:
15.04.2026 Bulletin 2026/16

(21) Application number: 24205329.6

(22) Date of filing: 08.10.2024

(51) International Patent Classification (IPC):
G01C 21/20 (2006.01)    B63B 79/40 (2020.01)
G05D 1/00 (2024.01)

(52) Cooperative Patent Classification (CPC):
G01C 21/203; B63B 79/40; G05D 1/00

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: ABB SCHWEIZ AG
5400 Baden (CH)

(72) Inventors:
• FEYZMAHDAVIAN, Hamid
169 73 Stockholm (SE)
• LINDER, Jonas
464 93 Mellerud (SE)
• TERVO, Kalevi
02730 Espoo (FI)

(74) Representative: Kransell & Wennborg KB
P.O. Box 27834
115 93 Stockholm (SE)

(54) **METHOD FOR PATH PLANNING FOR MARINE VESSELS IN LIMITED SPACES**

(57)   The present invention generally relates to a computer implemented method for generating a path (P) in a channel (40) for automated control of a marine vessel (10), the method comprising: acquiring (S102) position data (22) for the marine vessel, determining (S104), based on the position data, that the marine vessel is approaching or is in a channel, identifying (S106), from geographical map data (23), a starboard side portion of the channel relative to the position of the marine vessel, determining (S108) a collision free path in the starboard side portion (52) of the channel while travelling in the channel, and providing (S110) an output (60) of the determined collision free path for automated control of the vessel along the determined collision free path.

Fig. 3

**Description**

Field of the Invention

The present invention generally relates to computer implemented method for generating a path in a channel for a marine vessel, to a control unit for executing the method, to a marine vessel comprising the control unit, and to a corresponding computer program product.

Background

Path planning algorithms play a key role in optimizing performance and ensuring the successful execution of missions for marine vessels. These algorithms are responsible for generating position trajectories and speed profiles, while accounting for various constraints such as propulsion capabilities and obstacles at sea. Marine navigation in restricted waters, such as narrow channels and fairways, poses additional significant challenges due to the confined space and the need to adhere to maritime safety regulations.

However, current path planning methods for marine vessels often focus on optimizing operational efficiency, such as reducing travel time and minimizing energy consumption. This can result in trajectories that compromise safety, especially during turns within narrow passages, where vessels might "cut corners" to reduce distance, leading to potential violations of navigational rules.

Summary

In view of the above-mentioned and other drawbacks of the prior art, it is an object of the present invention to provide a method for path planning in channels for marine vessels that at least partly alleviates the drawbacks of prior art.

According to a first aspect of the invention, there is provided a computer implemented method for generating a path in a channel for automated control of a marine vessel, the method comprising: acquiring position data for the marine vessel, determining, based on the position data, that the marine vessel is approaching or is in a channel, identifying, from geographical map data, a starboard side portion of the channel relative to the position of the marine vessel, determining a collision free path in the starboard side portion of the channel while travelling in the channel, and providing an output of the determined collision free path for automated control of the vessel along the determined collision free path..

The present invention is at least partly based on the realization to incorporate a requirement in path planning that the marine vessel should maintain on the starboard side of the channel. This is specifically important in limited spaces, and even more so when there is a turn in a fairway with limited space. Traditional trajectory planning methods would cut the corner to save time and energy, which increase the risk of collision. The herein proposed method maintains the vessel in the correct side of the fairway all the time while providing a collision free path.

The safety of marine vessel navigation is improved by requiring compliance with the so called COLREG (International Regulations for Preventing Collisions at Sea) Rule 9 which is a requirement for marine vessels to maintain on the starboard side.

The method may comprise controlling the thrusters of the marine vessel to travel along the determined collision free path in the channel.

In embodiments, the method may comprise, determining, from the geographical map data, that a width of the channel is below a predetermined threshold, and in response identifying the starboard side portion. In other words, it is first determined whether the channel is a narrow channel where the method is most efficient. That is, only when the channel is sufficiently narrow does the method proceed with identifying the starboard side portion of the channel and the subsequent steps. Further, the marine vessel may dynamically recognize when strict navigation rules (such as Rule 9) must be applied. By automatically detecting narrow channels, the method enables marine vessels to adjust their path planning behavior without manual input, ensuring safe and efficient navigation in constrained spaces. Furthermore, an automated mechanism for the evaluation of water channel widths is incorporated in the vessel.

In embodiments, the starboard side portion of the channel may be a half-section of a width of the channel. In other words, the starboard half the channel width is considered the starboard side of the channel. This provides maximum space and flexibility in the collision free path that saves travel time and energy consumption. In other embodiments, the starboard side portion is less than half the width to provide a buffer distance to the other half where secondary vessels may travel.

In embodiments, determining the collision free path may comprise determining the collision free path that optimizes at least travel time and energy consumption of the path in the channel. Advantageously, the required fuel may be reduced providing for a more environmentally friendly operation of the marine vessel. Furthermore, this enhances the marine vessel's efficiency, reducing fuel usage and transit time while maintaining compliance with navigational rules, such as staying on the starboard side.

In embodiments, the collision free path may be determined based on an objective function that optimizes at least travel time and energy consumption of the path in the channel. Using an objective function provides for optimizing the collision free path while balancing various parameters such as travel time and energy consumption.

Preferably, the objective function minimizes at least travel time and energy consumption of the path in the channel while respecting the requirement to maintain on the starboard side while travelling in the channel.

In embodiments, the objective function may further minimize velocity changes of the marine vessel in the channel. Reducing velocity changes is one way to reduce energy consumption but also wear and tear on the marine vessel. Furthermore, a more stable velocity provides for safer operation in narrow spaces.

In embodiments, the method may comprise determining an initial collision free path in the channel that complies with a requirement to maintain on the starboard side while travelling in the channel, wherein the collision free path is a refined collision free path determined based on the initial collision free path and the objective function. In this way, a relatively accurate starting path is provided for objective function, thereby providing for a more computationally efficient determination of the refined collision free path. The optimization problem is configured to minimize factors such as travel time, energy consumption, and velocity changes. Using the determined initial collision free path as a starting point may improve the reliability that the generated refined paths are not only safe but also optimized for efficiency and performance.

In embodiments, the initial collision free path complies with COLREG Rule 9 and is generated using a graph search algorithm and a library of pre-defined feasible movements that the marine vessel can execute. Using a library of pre-defined movements allows for rapid determination of an initial path that ensures safe and compliant navigation. By utilizing this library, a feasible path can quickly be calculated which is particularly beneficial in real-time operations, where quick decision-making is critical for autonomous or semi-autonomous vessels. The use of graph search improves computational efficiency by systematically evaluating the best path options, reducing the time required for decision-making. The pre-defined feasible movements of the marine vessel ensure that only reasonable and feasible collision free paths are generated.

In embodiments, the method may comprise dynamically adjusting the collision-free path based on real-time environmental data, including wind conditions and sea current, while maintaining compliance with COLREG Rule 9.

Preferably, the method may be continuously performed as the marine vessel is operated.

The method may be autonomously performed for an at least partly autonomous marine vessel.

According to a second aspect of the invention, there is provided a control unit configured to perform the steps of any one of the embodiments of the first aspect.

Further effects and features of the second aspect of the invention are largely analogous to those described above in connection with the first aspect of the invention.

There is further provided a marine vessel comprising the control unit.

According to a third aspect of the invention, there is provided a computer program product for performing the method described herein, when executed by a control unit.

The computer program product comprises program code for: acquiring position data for the marine vessel, determining, based on the position data, that the marine vessel is approaching or is in a channel, identifying, from geographical map data, a starboard side portion of the channel relative to the position of the marine vessel, determining a collision free path in the starboard side portion of the channel while travelling in the channel, and providing an output of the determined collision free path for automated control of the vessel along the determined collision free path.

Further effects and features of the third aspect of the invention are largely analogous to those described above in connection with the first aspect and the second aspect of the invention.

Further features of, and advantages with, the present invention will become apparent when studying the appended claims and the following description. The skilled person realizes that different features of the present invention may be combined to create embodiments other than those described in the following, without departing from the scope of the present invention.

Brief Description of the Drawings

These and other aspects of the present invention will now be described in more detail, with reference to the appended drawings showing an example embodiment of the invention, wherein:

Fig. 1 schematically illustrates a marine vessel according to an embodiment of the invention;
Fig. 2A is a flow-chart of method steps according to embodiments of the present invention;
Fig. 2B is a flow-chart of method steps according to embodiments of the present invention;
Fig. 3 schematically illustrates a marine vessel in a channel according to embodiments of the present invention; and
Fig 4 schematically illustrates a marine vessel having a port side and a starboard side according to embodiments of the present invention.

Detailed Description of Example Embodiments

In the present detailed description, various embodiments of the present invention are herein described with reference to specific implementations. In describing embodiments, specific terminology is employed for the sake of clarity. However, the invention is not intended to be limited to the specific terminology so selected. While specific exemplary embodiments are discussed, it should be understood that this is done for illustration purposes only. A person skilled in the relevant art will recognize that other components and configurations can be used without parting from the scope of the invention.

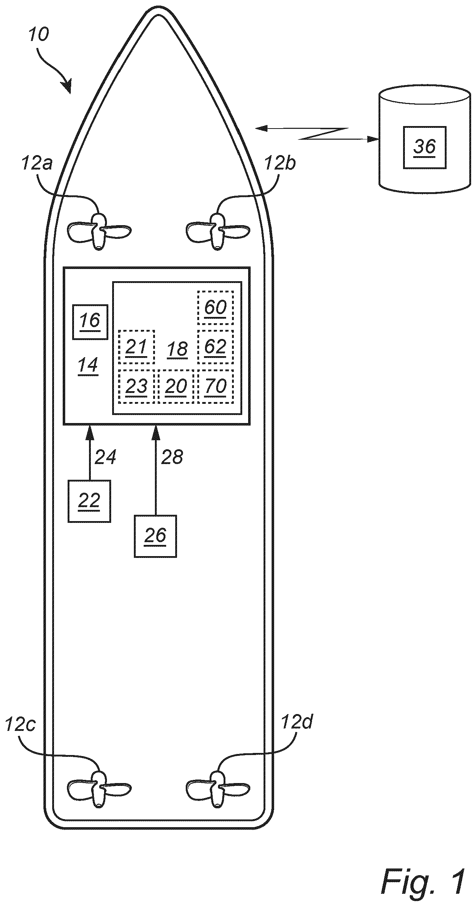

Fig. 1 schematically represents a top view of a marine vessel 10. The marine vessel 10 may for example be a ship or a floating production storage and offloading (FPSO) unit. The vessel 10 comprises a plurality of thrusters, here a first thruster 12a, a second thruster 12b, a third thruster 12c and a fourth thruster 12d. One, several or all of the thrusters 12a-12d may also be referred to with reference numeral "12".

Each thruster 12 is rotatable in a horizontal plane (parallel with the drawing plane of Fig. 1) into different thrust directions. Each thruster 12 may comprise a propeller and an engine driving the propeller. By increasing an engine speed of the engine, the thrust force of the thruster 12 can be increased, and vice versa. The thrusters 12 are here exemplified as azimuthing thrusters but the present invention is not limited thereto.

The vessel 10 further comprises a control system 14. The control system 14 of this example comprises a control unit 16 and a memory 18. The memory 18 has a computer program 20 stored thereon. The computer program 20 comprises program code which, when executed by the control unit 16, causes the data processing device, or control unit, 16 to perform, or command performance of, various steps described herein.

As shown in Fig. 1, a model 21 of the vessel 10 may be stored in the memory 18. The model 21 may for example be a nonlinear model of the vessel 10 describing the motion of the vessel 10 in the horizontal plane.

The vessel 10 of this example further comprises one or more sensors, here exemplified as a position sensor 22. The position sensor 22 is arranged to provide position data 24 to the control system 14. The position data 24 is indicative of a position of the vessel 10 in the horizontal plane. The position sensor 22 may for example be a GPS device further providing map data to the control system 14.

The vessel 10 may further comprise at least one sensor 26 for detecting objects near the marine vessel. Objects may be secondary vessels, port structures, islands, or other objects that may obstruct a travelling path for the marine vessel 10. The at least one sensor 26 may be a radar, Lidar, or similar sensor that can provide object data 28 concerning nearby objects to the control unit 16.

The control system 14 may receive position data 24, or data concerning surrounding objects also from a remote control center 36 or server 36.

Furthermore, the control unit 16 has access to geographical map data 23 stored in the memory 18. The geographical map 23 data include nautical charts and may also be accessible from a remote server 36.

When operating a marine vessel 10 along a path the control system 14 controls the thrusters 12 to propel the marine vessel from a first position to a second position. When traveling along a path in a constraint space such as in a narrow channel, it is desirable to find a safe path that avoids collisions with obstacles and that may also provide for optimized energy consumption. In narrow channels, and in particular in the event of turns in the narrow channel, it is important to find a trade-off between finding the most efficient path which at the same time minimizes collisions with other vessels. To address this, embodiments herein propose generating paths in channels for marine vessels that imposes a strict requirement that the generated collision free path is in the starboard side portion of the channel, thereby complying with COLREG Rule 9.

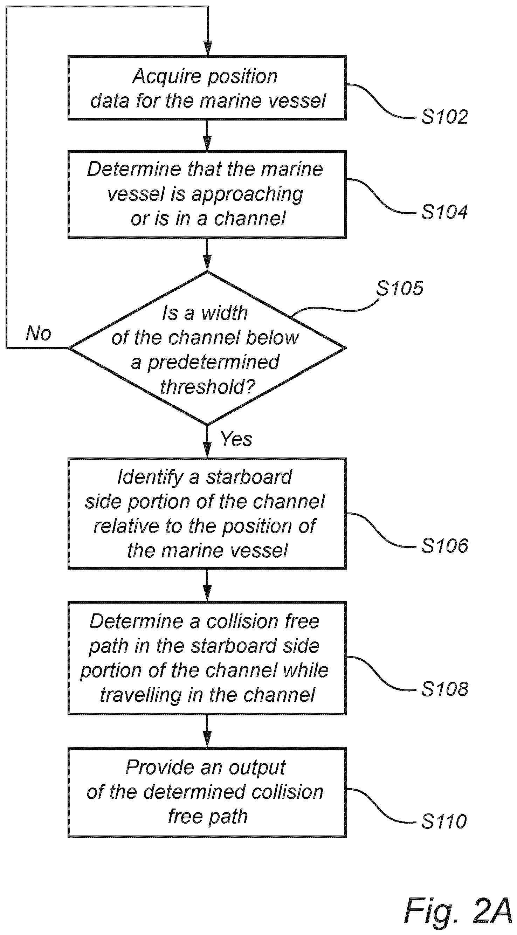

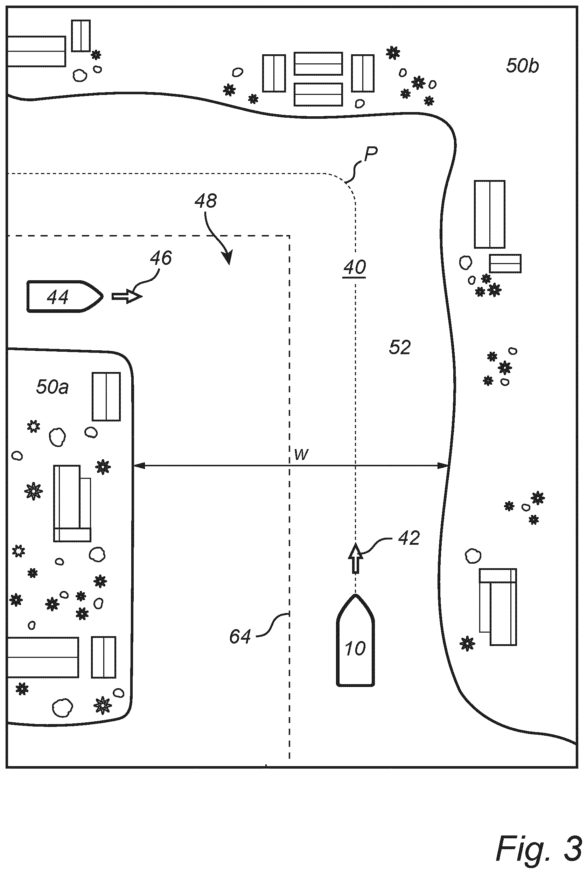

Fig. 2A-B are a flow-charts of method steps according to embodiments of the invention. Fig. 3 schematically illustrates a marine vessel 10 travelling along a path in a channel. Fig. 2A-B and fig. 3 will be described in conjunction.

The marine vessel 10 is travelling in a channel 40. The channel 40 has a width w between neighboring structures 50a, 50b or pieces of land.

The marine vessel is travelling in one direction 42 further into the channel. Ahead of the marine vessel 10 is a secondary marine vessel 44 travelling in a direction 46 in the channel 40. The secondary marine vessel 44 has just about reached a turn section 48 of the channel and is approaching the host marine vessel 10.

The marine vessel 10 utilizes a computer-implemented method for generating a path P in the channel 40 for automated control of the marine vessel 10.

In step S102, acquiring, by the control unit 16, position data 24 for the marine vessel 10. The control unit 16 determines in step S104 that the marine vessel 10 is in the channel 40 by comparing the position data to geographical map data 23.

In some embodiments, the control unit 14 evaluates the channel width to assess whether the channel is classified as being narrow. Thus, in step S105, the control unit determines, from the geographical map data, whether a width w of the channel 40 is below a predetermined threshold. In the positive, the method process to step S106. In the negative, the method starts over in step S102.

A narrow channel is typically considered a body of water where vessels are limited in their ability to maneuver due to the channel's width, and where it is necessary for vessels to follow a defined path to avoid grounding or collision. The designation of a narrow channel can vary depending on factors like the size and draft of vessels using the waterway, and the presence of navigational hazards. So, the width for a narrow channel is context-dependent and defined by local maritime authorities or the navigational characteristics of the area.

In step S106, identifying, by the control unit 16, from geographical map data 23, a starboard side portion 52 of the channel relative to the position of the marine vessel 10. The starboard side portion 52 is at most half the width w of the channel. In this example, the starboard side portion 52 of the channel is a roughly a half-section of a channel width w of the channel. That is, the starboard side portion 52 is about half the channel width w.

In step S108, the control unit 16 determines a collision free path P in the starboard side portion 52 of the channel while travelling in the channel 40. The requirement here is to maintain on the starboard side portion 52 throughout the path P. This requirement complies with COLREG Rule 9.

In step S110, the control unit 16 provides an output 60 of the determined collision free path P. The output data 60 is used by the control system 14 for automatic control of the propulsion of the marine vessel 10 along the generated path. The output data 60 may for example include control signals for controlling thrusters of the propulsion system such that the generated path P can be followed.

The control unit may further be configured to control the marine vessel to travel along the generated path P, preferably without or with only minor human intervention.

Determining the collision free path P comprises determining the collision free path that optimizes at least travel time and energy consumption of the path P in the channel 40 while still complying with maintaining on the starboard side 52.

Finding such path P may be achieved using objective function 62, stored in memory 18, that optimizes at least travel time and energy consumption of the path in the channel while respecting the requirement to maintain on the starboard side while travelling in the channel. In some example embodiments, the objective function further minimizes velocity changes of the marine vessel 10 in the channel 40.

Determining the path P may be achieved in various ways other than using the objective function. One possible methodology to generate the path P is to utilize techniques such as rule-based methods. These rely on predefined rules and heuristics to guide path planning without formal optimization. Another possibility could be using machine learning techniques such as reinforcement learning, where the system learns an optimal path through trial and error, rather than explicitly optimizing a mathematical function. Additionally, multi-objective optimization could be used, allowing for a more flexible approach that balances multiple performance criteria simultaneously, rather than optimizing a single objective function. Other example algorithms include genetic algorithms, convolutional neural networks or recurrent neural networks, to mention a few further examples.

An optimization problem for generating a path P that utilizes an objective function will now be described, as an example.

The objective function includes several terms to ensure time optimality, Rule 9 integration into path planning, and energy optimality. The optimization problem is formulated as

$$\underset{\eta(\cdot),v(\cdot),F(\cdot),s_{r9},\,t_f}{minimize} \quad t_f + q_{r9}s_{r9} + \int_0^{t_f}(q_F\|F\|^2 + q_{\dot{F}}\|\dot{F}\|^2)\,dt \quad (OP1)$$

$$subject\ to \quad \begin{bmatrix} \dot{\eta} \\ \dot{v} \\ \dot{F} \end{bmatrix} = \begin{bmatrix} R(\varphi)v \\ M^{-1}(-C(v)v - D(v)v + BF) \\ \omega \end{bmatrix}, \quad (OP2)$$

$$A_\tau BF \le b_\tau, \quad (OP3)$$

$$\omega_{\min} \le \omega \le \omega_{\max}, \quad (OP4)$$

$$\eta(0) = \eta_s, \quad (OP5)$$

$$v(0) = v_s, \quad (OP6)$$

$$A_s \left( c_{rot}(\varphi_k) \begin{bmatrix} x_i \\ y_i \end{bmatrix} + \begin{bmatrix} x_k \\ y_k \end{bmatrix} + (d_{ch}(k) - s_{r9})c_{rot}(\varphi_{A^*}(k)) \begin{bmatrix} 0 \\ -1 \end{bmatrix} \right) \le b_s \quad (OP7)$$

In the optimization problem, OP1 represents the objective function, including several terms:

$t_f$ is the duration time of maneuvering.

$s_{r9}$ is the slack variable corresponding to integrating Rule 9.

$q_{r9}$ is the weight in the objective function that controls the importance of adhering to Rule 9 compared to other terms in the objective function. It represents the tradeoff between optimizing for time/energy and maintaining a distance from the centerline 64 of the channel 40 as specified by Rule 9.

$\|F\|^2$ is the term representing the forces required to be generated by the thrusters 12a-d. This term promotes energy-optimal solutions.

$q_F$ is the weight penalizing the force generated by the thrusters 12a-d.

$\|\dot{F}\|^2$ is the term representing the rate of change of the forces to be generated by the thrusters 12a-d. This term encourages less aggressive and smoother use of thrusters.

$q_{\dot{F}}$ is the weight penalizing the rate of change the thruster forces.

The term $\|F\|^2$ can be replaced with energy cost metrics such as the mechanical energy consumed by the marine vessel 10 10, or the electrical energy used by the propulsion system.

The decision variables of the optimization problem include the position and velocity trajectories for marine vessel 10 maneuvering, the forces and torque needed to follow these trajectories, and the duration of the maneuvering task.

In the optimization problem, OP2 represents the constraint corresponding to the kinematic and kinetic equations of the marine vessel 10. This constraint guarantees that the path generated by solving the optimization problem adheres to the marine vessel's 10 motion equations, thereby guaranteeing dynamic feasibility. In the equality (OP2), $\eta = [x, y, \varphi]^T \in R^3$ denotes the position and orientation of the vessel represented in an Earth-fixed frame, where x and y, respectively, are distances North and East from the NED (North, East, and Down system) origin to the vessel's center of gravity, and $\varphi$ is the heading angle. The velocity vector of the vessel 10 is denoted by $v = [u, v, r]^T \in R^3$, where u describes the body-fixed velocity in surge (along the vessel's longitudinal axis), v sway (across that axis), and r yaw rate (angular velocity). The rotation matrix $R(\varphi)$ is given by

$$R(\varphi) = \begin{bmatrix} \cos \varphi & -\sin \varphi & 0 \\ \sin \varphi & \cos \varphi & 0 \\ 0 & 0 & 1 \end{bmatrix}$$

In the equality (OP2), $M$ is the body inertia matrix, which is the sum of rigid-body mass and hydrodynamic added mass. The $C(v)$ matrix contains nonlinear terms due to the Coriolis and centripetal effects. Matrix $D(v)$ contains hydrodynamic damping or drag forces. The vector $F = [F_x, F_y, M_r]^T$ captures total forces and moment due to the thrusters 12a-d, where $F_x$, $F_y$, and $M_r$ are respectively forces and torque that act on the surge, sway, and yaw dynamics. $\omega$ is the rate of change of forces generated by thrusters of the vessel.

Inequality constraints OP3 and OP4 correspond to the capabilities of the marine vessel's 10 propulsion system. These constraints impose limits on the force and torque generated by the marine vessel's 10 thrusters, as well as restrictions on the rate at which the forces generated by each thruster can change. The matrices $A_\tau, B, b_\tau$ in (OP3) are calculated based on the positions of the marine vessel's 10 thrusters, as well as their limitations in terms of the magnitude and direction of the forces they can generate.

Equality constraints (OP5) and (OP6) represent the marine vessel's 10 status at the time the optimization problem is being solved. These constraints ensure that the optimization problem is initialized with the marine vessel's 10 current position and velocity, allowing the marine vessel 10 to follow the generated path smoothly without abrupt maneuvers.

Inequality constraint OP7 is used to incorporate alignment with Rule 9. In this constraint, $s_{r9} \in [0, d_{ch}]$ represents a slack variable, $\varphi_{A^*}(k)$ is the heading angle at the kth sample point of the initial path, and $d_{ch}(k)$ is half of the channel width at that specific sample point. This value is calculated as

$$d_{ch} = \frac{0.5(dS_k + dP_k)}{1 + e^{(dS_k + dP_k) - W_{nc}}}.$$

Here, $dS_k$ and $dP_k$ respectively stand for the minimum distances between the marine vessel's 10 location corresponding to the kth sample of the initial path and obstacles positioned on the starboard and port sides. The denominator in the above equation acts as a soft switch, effectively distinguishing between narrow channels and wider regions. By adding this new inequality to the optimization problem, the optimization algorithm directs its efforts towards minimizing the slack variable $s_{r9}$, looking for a value close to zero. This adjustment translates to trajectories maintaining a distance of at least $0.5(dS_k + dP_k)$, equivalent to half the channel's width, from obstacles situated on the port side. When $s_{r9}$ equals $d_{ch}$, the algorithm is free to use the entire area of the local polygon, if necessary. Geometric interpretation of the new safety inequality is that every point of the area around the marine vessel 10 is shifted by the distance of $d_{ch}(k) - s_{r9}$ in the direction opposite to the port side. This transformation aligns with the vector $(c_{rot}(\varphi_{A*}(k))[0, -1]^T$, which is the unit vector pointing towards the port side. The matrices $A_s$, $b_s$ are calculated based on the locations of both static and moving obstacles around the marine vessel 10. These matrices define a collision-free polygon, which can then be used by the algorithm to find a safe path. In these two inequalities, $c_{rot}(\varphi)$ is the rotation matrix from the body-frame to the earth-frame, given by

$$c_{rot}(\varphi) = \begin{bmatrix} \cos(\varphi) & -\sin(\varphi) \\ \sin(\varphi) & \cos(\varphi) \end{bmatrix}$$

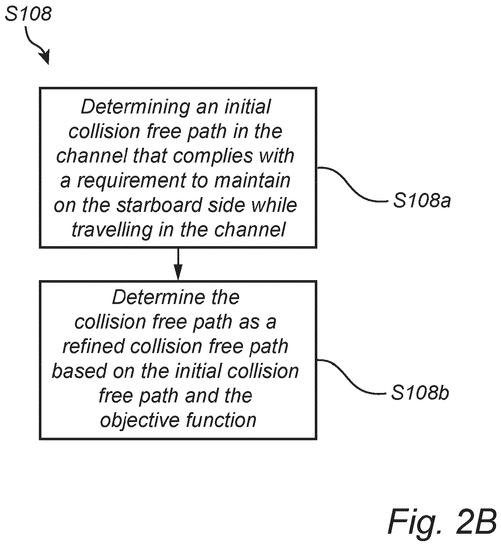

In some embodiments, described in the flow-chart of fig. 2B, step S108 comprises step S108a of determining, by the control unit 16 an initial collision free path in the channel that complies with a requirement to maintain on the starboard side while travelling in the channel. The collision free path is determined in step S108b as a refined collision free path determined based on the initial collision free path and the objective function.

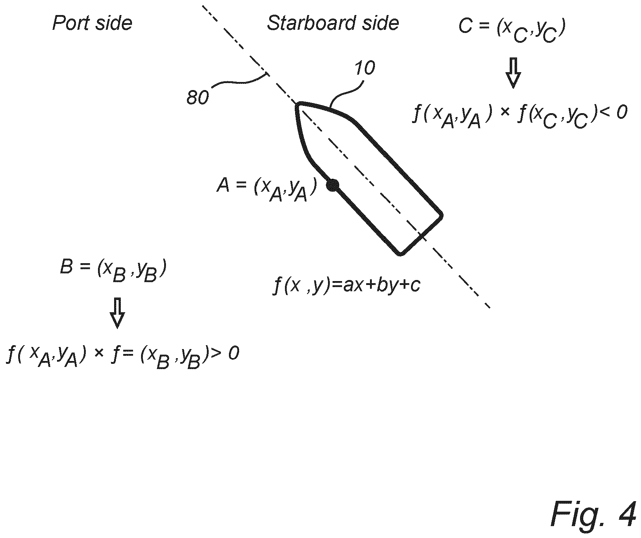

The initial collision free path complies with COLREG Rule 9 and is generated using a graph search algorithm and a library 70 of pre-defined feasible movements that the marine vessel can execute. The library 70 may either be stored in the on-board memory 18 or it may be accessible from a remote server 36. Purely as an example, using the library 70 of pre-defined feasible movements will now be described in more detail with reference to fig. 4.

Fig. 4 schematically illustrates a marine vessel 10. Motion primitives are pre-defined, and feasible movements that a marine vessel 10 can execute. They represent a comprehensive set of actions the marine vessel 10 can use to navigate from one state to another, including straightforward movements, heading changes, velocity adjustments, and other basic maneuvers. Using motion primitives ensures computational efficiency and kinematic feasibility of the initial path, without violating any constraints on marine vessel 10 capability.

To incorporate Rule 9 into the initial solution generation phase, a specific term is added to the cost function of the graph-search algorithm. This term is defined as

$$J_{come} = \sum_{i=1}^{N_p} \frac{\max(dS_i - dP_i,\ 0)}{1 + e^{(dS_i + dP_i) - W_{nc}}}.$$

This equation involves several key variables. First, $N_p$ represents the horizon length for the motion primitive chosen by the algorithm in each iteration. Furthermore, $W_{nc}$ is the width threshold for identification of a channel as narrow. Adding to this, $dS_i$ and $dP_i$ are the minimum distances between the marine vessel's 10 location corresponding to the ith sample of the motion primitive and obstacles positioned on the starboard and port sides, respectively. Several important points regarding this equation are as follows:

If the marine vessel's 10 position at the ith sample is closer to obstacles on the starboard side, then $dS_i < dP_i$, implying that the second term within the $J_{come}$ expression becomes zero. In this case, there is no additional penalty imposed on the chosen motion primitive, as the trajectory aligns with Rule 9. On the contrary, when the marine vessel's 10 position at the ith sample is nearer to obstacles on the port side, $dS_i > dP_i$ holds true. As a result, the cost increases proportionally to the difference between $dS_i$ and $dP_i$. In other words, as the trajectory approaches port-side obstacles more closely, the associated cost of its selection through the algorithm also increases.

The denominator, given by $1 + e^{(dS_i + dP_i) - W_{nc}}$, operates as a soft switch for activating the newly introduced term associated with Rule 9. Specifically, the quantity $(dS_i + dP_i)$ represents the width w of the channel 40 at the ith sample point. When $(dS_i + dP_i) \gg W_{nc}$, indicating that the marine vessel 10 is positioned outside a narrow channel, the denominator takes a notably large value. Thus, the second term within $J_{come}$ diminishes substantially, meaning that Rule 9 is not considered. Conversely, when $(dS_i + dP_i) \leq W_{nc}$, the denominator is close to one. Hence, the term aligned with Rule 9 contributes to $J_{come}$.

The static obstacles are represented as polygons, each described by a set of linear equations. This characterization enables the efficient calculation of the distance from a point to each static obstacle. However, a question arises regarding how to distinguish obstacles on the port side from those on the starboard side. To address this, the equation of a straight-line 80 passing through the center of gravity of the vessel 10 with a slope equal to the heading angle is determined. Point A situated on the port side at a distance of Δd from the centre of gravity is computed as

$$\begin{bmatrix} x_A \\ y_A \end{bmatrix} = \begin{bmatrix} \cos(\varphi) & -\sin(\varphi) \\ \sin(\varphi) & \cos(\varphi) \end{bmatrix} \begin{bmatrix} 0 \\ -\Delta d \end{bmatrix} + \begin{bmatrix} x_{CG} \\ y_{CG} \end{bmatrix}.$$

With the straight-line expressed as

$$f(x, y) = ax + by + c,$$

the sign of $f(x_A, y_A)$ plays a key role in determining a point's relationship with the marine vessel 10. For example, considering a point like point B in fig. 4, if the sign of $f(x_B, y_B)$ matches that of $f(x_A, y_A)$, Point B is also located on the port side. Conversely, when the sign of $f(x_C, y_C)$ is the opposite of the sign of $f(x_A, y_A)$, a point such a point C in the fig. 4 is classified as being on the starboard side.

The method described herein may be autonomously performed by the control unit 16 for an at least partly autonomous marine vessel 10.

The method described herein generates a path for the automated control of the vessel, optionally optimizing both travel time and energy efficiency. It not only mimics the actions of expert human operators but also improves upon performance criteria such as time and energy. Unlike human operators, however, the control unit may calculate the entire path, P, for the present maneuvering task-from start to finish-all at once.

The computer program product 20 comprises program code for executing the method described herein, including at least code for acquiring position data for the marine vessel, code for determining, based on the position data, that the marine vessel is approaching or is in a channel, code for identifying, from geographical map data, a starboard side portion of the channel relative to the position of the marine vessel, code for determining a collision free path in the starboard side portion of the channel while travelling in the channel, and code for providing an output of the determined collision free path.

A control unit may include a microprocessor, microcontroller, programmable digital signal processor or another programmable device. The control unit may also, or instead, include an application specific integrated circuit, a programmable gate array or programmable array logic, a programmable logic device, or a digital signal processor. Where the control unit includes a programmable device such as the microprocessor, microcontroller or programmable digital signal processor mentioned above, the processor may further include computer executable code that controls operation of the programmable device.

In one or more examples, the functions described may be implemented in hardware, software, firmware, or any combination thereof. If implemented in software, the functions may be stored on or transmitted over as one or more instructions or code on a computer-readable medium and executed by a hardware-based processing unit. Computer-readable media may include computer-readable storage media, which correspond to tangible media such as data storage media, or communication media including any media that facilitate the transfer of a computer program from one place to another, e.g., according to a communication protocol. In this manner, computer-readable media generally may correspond to (1) tangible computer-readable storage media which are non-transitory or (2) a communication media such as signal or carrier waves. Data storage media may be any available media that can be accessed by one or more computers or one or more processors to retrieve instructions, code and/or data structures for implementation of the techniques described in this disclosure. A computer program product may include a computer-readable medium.

By way of example, and not limitation, such computer-readable storage media can comprise RAM, ROM, EEPROM, CD-ROM or other optical disk storage, magnetic disk storage, or other magnetic storage devices, flash memory, or any other medium that can be used to store desired program code in the form of instructions or data structures and that can be accessed by a computer.

Even though the invention has been described with reference to specific exemplifying embodiments thereof, many different alterations, modifications and the like will become apparent for those skilled in the art.

Additionally, variations to the disclosed embodiments can be understood and effected by the skilled person in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage.

**Claims**

1. A computer implemented method for generating a path (P) in a channel (40) for automated control of a marine vessel (10), the method comprising:

   acquiring (S102) position data (22) for the marine vessel,
   determining (S104), based on the position data, that the marine vessel is approaching or is in a channel,
   identifying (S106), from geographical map data (23), a starboard side portion of the channel relative to the position of the marine vessel,
   determining (S108) a collision free path in the starboard side portion (52) of the channel while travelling in the channel, and
   providing (S110) an output (60) of the determined collision free path for automated control of the vessel along the determined collision free path.

2. The method of claim 1, comprising:
   determining (S105), from the geographical map data, that a width (w) of the channel is below a predetermined threshold, and in response, identifying the starboard side portion.

3. The method of any of claims 1-2, wherein the starboard side portion of the channel is a half-section of a channel width of the channel.

4. The method of any of claims 1-3, wherein the requirement to maintain on the starboard side is COLREG Rule 9.

5. The method of any of claims 1-4, wherein determining the collision free path comprises determining the collision free path that optimizes at least travel time and energy consumption of the path in the channel.

6. The method of claim 5, wherein the collision free path is determined based on an objective function that optimizes at least travel time and energy consumption of the path in the channel.

7. The method of any of claims 5-6, wherein the objective function minimizes at least travel time and energy consumption of the path in the channel while respecting the requirement to maintain on the starboard side while travelling in the channel.

8. The method of any of claims 5-7, wherein the objective function further minimizes velocity changes of the marine vessel in the channel.

9. The method of any of claims 5-8, comprising:
   determining an initial collision free path in the channel that complies with a requirement to maintain on the starboard side while travelling in the channel, wherein the collision free path is a refined collision free path determined based on the initial collision free path and the objective function.

10. The method of claim 9, wherein the initial collision free path complies with COLREG Rule 9 and is generated using a graph search algorithm and a library of pre-defined feasible movements that the marine vessel can execute.

11. The method of any of claims 1-10, comprising dynamically adjusting the collision-free path based on real-time environmental data, including wind conditions and sea current, while maintaining compliance with COLREG Rule 9.

12. The method of any of claims 1-11, the method being autonomously performed for an at least partly autonomous marine vessel.

13. A control unit (16) configured to execute the method of any one of the preceding claims.

14. A marine vessel comprising a control unit according to claim 13.

15. A computer program product (20) comprising program code for performing the method according to any one of claims 1-12, when executed by a control unit.

Fig. 1

Acquire position
data for the marine vessel — S102

Determine that the marine
vessel is approaching
or is in a channel — S104

S105
Is a width
of the channel below
a predetermined
threshold?

No

Yes

Identify a starboard
side portion of the channel
relative to the position of
the marine vessel — S106

Determine a collision free
path in the starboard side
portion of the channel while
travelling in the channel — S108

Provide an output
of the determined collision
free path — S110

*Fig. 2A*

*S108*

Determining an initial
collision free path in the
channel that complies with
a requirement to maintain
on the starboard side while
travelling in the channel

─ *S108a*

Determine the
collision free path as a
refined collision free path
based on the initial collision
free path and the
objective function

─ *S108b*

*Fig. 2B*

Fig. 3

Port side      Starboard side     $C = (x_C, y_C)$

*80*

*10*

$$f(x_A, y_A) \times f(x_C, y_C) < 0$$

$A = (x_A, y_A)$

$B = (x_B, y_B)$      $f(x, y) = ax + by + c$

$$f(x_A, y_A) \times f = (x_B, y_B) > 0$$

*Fig. 4*

Europäisches
Patentamt

European
Patent Office

Office européen
des brevets

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 300 235 A1 (VOLVO PENTA CORP [SE]) 3 January 2024 (2024-01-03) | 1-4, 12-15 | INV. G01C21/20 |
| Y | * paragraphs [0018] - [0029]; figure 2 * | 5-11 | B63B79/40 G05D1/00 |
| X | CN 115 373 394 A (UNIV SHANGHAI JIAOTONG) 22 November 2022 (2022-11-22) * paragraphs [0007] - [0051]; figures 1-2 * | 1,12-15 | |
| A | PETER NICHOLAS HANSEN ET AL: "Autonomous Navigation in Confined Waters -- A COLREGs Rule 9 Compliant Framework", ARXIV.ORG, CORNELL UNIVERSITY LIBRARY, 201 OLIN LIBRARY CORNELL UNIVERSITY ITHACA, NY 14853, 17 July 2022 (2022-07-17), XP091273803, * abstract * | 4 | |
| Y | US 2024/310857 A1 (FEYZMAHDAVIAN HAMID [SE] ET AL) 19 September 2024 (2024-09-19) * paragraphs [0005], [0021] * | 5-11 | |
| Y | ÖZTÜRK ÜLKÜ ET AL: "A review of path planning algorithms in maritime autonomous surface ships: Navigation safety perspective", OCEAN ENGINEERING, PERGAMON, AMSTERDAM, NL, vol. 251, 30 March 2022 (2022-03-30), XP087019119, ISSN: 0029-8018, DOI: 10.1016/J.OCEANENG.2022.111010 [retrieved on 2022-03-30] * figure 18 * | 5-10 | **TECHNICAL FIELDS SEARCHED** (IPC)<br><br>G05D<br>G01C<br>B63J<br>B63B |

-/--

The present search report has been drawn up for all claims

| Place of search | Date of completion of the search | Examiner |
|---|---|---|
| The Hague | 6 February 2025 | van Doornum, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................
& : member of the same patent family, corresponding document

EPO FORM 1503 03.82 (P04C01)

| | Europäisches Patentamt European Patent Office Office européen des brevets | **EUROPEAN SEARCH REPORT** | **Application Number** EP 24 20 5329 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | DE VRIES JITSKE ET AL: "Regulations Aware Motion Planning for Autonomous Surface Vessels in Urban Canals", 2022 INTERNATIONAL CONFERENCE ON ROBOTICS AND AUTOMATION (ICRA), IEEE, 23 May 2022 (2022-05-23), pages 3291-3297, XP034147160, DOI: 10.1109/ICRA46639.2022.9811608 [retrieved on 2022-07-12] * abstract *  ----- | 1-15 | |
| A | CHO YONGHOON ET AL: "Autonomous Ship Collision Avoidance in Restricted Waterways Considering Maritime Navigation Rules", IEEE JOURNAL OF OCEANIC ENGINEERING, IEEE SERVICE CENTER, PISCATAWAY, NJ, US, vol. 48, no. 4, 1 October 2023 (2023-10-01), pages 1009-1018, XP011951340, ISSN: 0364-9059, DOI: 10.1109/JOE.2023.3296836 [retrieved on 2023-08-22] * abstract *  ----- | 1-15 | **TECHNICAL FIELDS SEARCHED (IPC)** |

The present search report has been drawn up for all claims

| Place of search | Date of completion of the search | Examiner |
|---|---|---|
| The Hague | 6 February 2025 | van Doornum, A |

EPO FORM 1503 03.82 (P04C01)

page 2 of 2

## ANNEX TO THE EUROPEAN SEARCH REPORT
## ON EUROPEAN PATENT APPLICATION NO.

EP 24 20 5329

This annex lists the patent family members relating to the patent documents cited in  the above-mentioned European search report.
The members are as contained in the European Patent Office EDP file on
The European Patent Office is in no way liable for these particulars which are merely given for the purpose of information.

06-02-2025

| Patent document cited in search report | | Publication date | Patent family member(s) | | Publication date |
|---|---|---|---|---|---|
| EP 4300235 | A1 | 03-01-2024 | NONE | | |
| CN 115373394 | A | 22-11-2022 | NONE | | |
| US 2024310857 | A1 | 19-09-2024 | EP | 4411505 A1 | 07-08-2024 |
| | | | US | 2024310857 A1 | 19-09-2024 |

For more details about this annex : see Official Journal of the European Patent Office, No. 12/82